Europäisches Patentamt

European Patent Office

Office européen des brevets

(11) Numéro de publication: **0 376 769 B1**

(12) **FASCICULE DE BREVET EUROPEEN**

(45) Date de publication de fascicule du brevet: **03.08.94**    (51) Int. Cl.⁵: **G06F 15/347**, G06F 15/332

(21) Numéro de dépôt: **89403213.5**

(22) Date de dépôt: **21.11.89**

(54) **Dispositif à registres à décalage et à opérateurs de permutation pour la transposition matricielle ligne-colonne.**

(30) Priorité: **25.11.88 FR 8815468**

(43) Date de publication de la demande:
**04.07.90 Bulletin 90/27**

(45) Mention de la délivrance du brevet:
**03.08.94 Bulletin 94/31**

(84) Etats contractants désignés:
**DE ES FR GB IT NL**

(56) Documents cités:
**EP-A- 0 267 729**
**US-A- 4 276 611**
**US-A- 4 769 790**

**IEEE TRANSACTIONS ON COMPUTERS, vol.
C-36, no. 1, janvier 1987, pages 117-122, IEEE,
New York, US; D.P. O'LEARY: "Systolic arrays
for matrix transpose andother reorderings"**

**CONFERENCE PROCEEDINGS OF THE 7TH
ANNUAL SYMPOSIUM ON COMPUTER ARCHI-
TECTURE, 6-8 mai 1980, pages 190-195, IEEE,
New York, US; D. NASSIMI et al.: "A selfrouting BENES network"**

(73) Titulaire: **FRANCE TELECOM**
**6, Place d'Alleray**
**F-75015 Paris(FR)**

Titulaire: **TELEDIFFUSION DE FRANCE S.A.**
**10, rue d'Oradour sur Glane**
**F-75015 Paris(FR)**

(72) Inventeur: **Carlac'h, Jean-Claude**
**20 Square Auguste Dupouy**
**F-35700 Rennes(FR)**

(74) Mandataire: **Rodhain, Claude et al**
**Cabinet Claude Rodhain**
**30, rue la Boétie**
**F-75008 Paris (FR)**

PROCEEDINGS OF THE ICASSP'84, San Diego, CA, 19-21 mars 1984, pages 4.11.1-4.11.4, IEEE, New York, US; N.U. CHOWDARY et al.: "A high speed two-dimensionalFET processor"

IEEE TRANSACTIONS ON COMPUTERS, juillet 1972, pages 801-803, New York, US; J.O.EKLUNDH: "A fast computer method for matrix transposing"

IEEE TRANSACTIONS ON COMPUTERS, vol. 23, no. 9, septembre 1974, pages 967-970,New York, US; L.G. DELCARO et al.: "A method for transposing externally stored-matrices"

## Description

Le domaine de l'invention est celui des dispositifs électroniques permettant d'assurer la transposition de toute matrice carrée dont la taille s'exprime par puissance de 2 et dont les éléments sont fournis en séquence.

Plus particulièrement, l'invention concerne un dispositif à registres à décalage série et à opérateurs de permutation, ledit dispositif recevant en entrée une matrice source de $(2^{n+1}x2^{n+1})$ entités transmise en séquence et restituant en sortie une matrice transposée correspondante.

Le dispositif selon l'invention trouve une application particulière dans le codage d'images en noir et blanc ou en couleur, sous forme numérique comprimée, sur un réseau téléphonique ou un canal d'un réseau numérique à intégration de service.

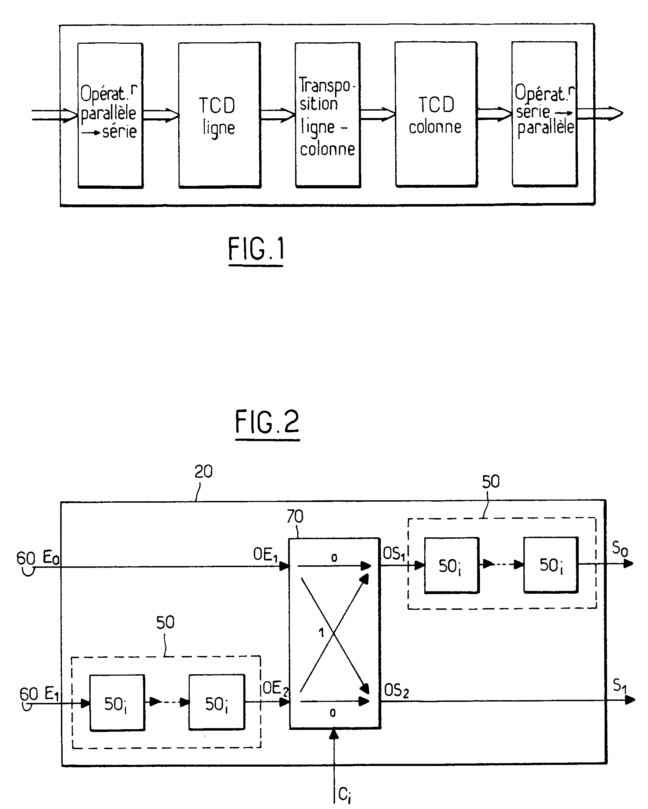

Pour le codage d'images en réduction de débit, on peut utiliser un circuit spécifique réalisant la transformée en cosinus discrète (T.C.D.) bidimensionnelle sur des sous-blocs d'images de 8x8 pixels. Plus particulièrement, ce type de circuit comporte 5 éléments de traitement de signal comme visible en figure 1. La transformée en cosinus discrète bi-dimensionnelle sur des matrices de points de 8x8 peut être décomposée en 5 étapes distinctes correspondant aux 5 éléments de traitement du signal précédemment cités. Les 64 données (pixels ou coefficients) d'un bloc de taille 8x8 données sont reçues séquentiellement selon un balayage télévision du bloc. Un opérateur d'entrée reçoit les données sous la forme de mots d'au moins 8 bits en parallèle, et constitue des lignes de 8 mots qui sont ensuite parallélisés sur un bus de 8 fils où les mots sont présentés en mode série sur au moins 8 bits. On effectue, ensuite, 8 fois une transformée en cosinus discrète mono-dimensionnelle sur chacune des 8 lignes de 8 mots. On obtient alors 8 lignes de 8 résultats qui forment une matrice 8x8. Une transposition matricielle ligne-colonne est effectuée sur cette matrice 8x8 ce qui est la fonction du dispositif selon l'invention. Une seconde opération de transformée en cosinus discrète mono-dimentionnelle est effectuée sur les 8 lignes de 8 mots de la matrice transposée, fournissant 64 valeurs appelées "coefficients". On réalise, enfin, en sortie du circuit, la fonction réciproque de transformation des 8 trains de 8 bits en 8 mots fournis en série sur un bus de sortie 8 bits. Il est intéressant de remarquer que les 2 opérations extrêmes du circuit peuvent être réalisées aussi par le dispositif de transposition matricielle selon l'invention, puisque les conversions parallèle-série et série-parallèle peuvent être considérées comme des transpositions matricielles ligne-colonne.

On connait déjà des dispositifs pour la transposition matricielle ligne-colonne, du type à mémoire vive à accès aléatoire. Dans ces dispositifs connus, la transposition d'une matrice E (n,n) s'effectue par écriture de chacun des éléments E (i,j) de la matrice E ligne après ligne dans une mémoire tampon, puis on effectue une lecture de cette matrice E, depuis cette mémoire tampon, colonne après colonne de sorte que la matrice reconstituée lors de la phase de lecture corresponde à la matrice initiale transposée. De tels dispositifs sont notamment divulgués dans le brevet EP-A-0 267 729 et dans le document "Proceedings of the ICASSP'84, San-Diego, California, 19-21 mars 1984, vol. 1, pages 4.11.1.-4.11.4, IEEE, New-York, US, N.U. SHOWDARY et al. : "A high speed two-dimensional FFT processor".

Cependant, ce type de dispositif à mémoire tampon présente l'inconvénient d'un temps d'accès à la mémoire limité en lecture comme en écriture, ce temps d'accès dépendant d'une part de la technologie utilisée pour la mémoire, et d'autre part du nombre d'éléments de la matrice à transposer. Par ailleurs, ce type de mémoire tampon de transposition est généralement géré entre deux tâches de calcul et il est alors nécessaire d'y accéder simultanément en lecture et en écriture à deux adresses mémoire différentes. Puisque le temps d'accès à la mémoire ne peut être divisé par 2, on est alors obligé de doubler la taille de la mémoire de transposition, de façon à respecter des impératifs de temps d'accès. On se heurte, alors, à des problèmes d'implantation des circuits.

Ces problèmes ont été partiellement résolus par un dispositif du type à mémoire tampon répartie en deux demi-plans identiques de mémorisation, munis de moyens individuels de lecture/écriture (Brevet français n° 87 16781). Cependant, il est bien connu que les dispositifs de calcul utilisant des mémoires ont des temps d'exécution élevé du fait du mécanisme d'adressage des mémoires.

Le document IEEE transaction and computer, vol. C-36, n°1, janvier 1987, pages 117 à 122, IEEE, New-York, NY, US ; D.P. O'LEARY : "Systolic arrays for matrix transpose and other reorderings" divulgue un vecteur systolique pour la transposition des matrices nxn. Le vecteur systolique utilise $n^2$ processeurs de permutation et $n^2$ registres mémoires. Chaque processeur est relié à son voisin placé à sa droite, et à son voisin supérieur. La matrice transposée est appliquée colonne par colonne à l'entrée du vecteur et celui-ci restitue les éléments de matrice en diagonale. Cependant, ces dispositifs connus ont des temps de traitement élevés du fait de leur configuration et leur mise en oeuvre est complexe du fait du nombre élevé de processeurs.

On connait aussi des dispositifs à base de transfert de charges ou "charge coupled device".

Ce type de dispositif analogique stocke et opère des décalages sur des quantités de charges électriques. Son fonctionnement est similaire à celui des dispositifs à mémoire tampon décrit précédemment, dans lequel on y écrit les éléments du bloc d'entrée colonne après colonne, et on y lit le bloc transposé de sortie ligne après ligne.

Ce type de dispositif analogique à transfert de charges présente un inconvénient majeur puisqu'il ne peut garantir une précision des transferts des valeurs analogiques des quantités de charges, comparable à celle d'un système numérique où les nombres sont codifiés sur N bits, c'est-à-dire avec une précision de $2^{-N}$. Par ailleurs, l'implantation de ce type de dispositif requiert une surface importante de silicium, des procédés technologiques de fabrication complexes et coûteux. De plus, les dispositifs à transfert de charges ne fonctionnent pas en dessous d'une fréquence basse (environ 100 k.Hertz) du fait des courants de fuite.

En conséquence, les principes connus de transposition ne permettent pas d'obtenir simultanément une rapidité optimale de fonctionnement et un encombrement minimal des composants.

On remarquera s'il est connu du brevet US-A-476 9790 (YAMASHITA) un dispositif présentant une cellule pour la transposition matricielle ligne-colonne de matrices carrées.

Les antériorités IEEEE Transactions on Computers, respectivement juillet 1972 p.801-803 (J.O. EKLUNDH) et septembre 1974 p 967-970 (L.G. DELCARO) divulguent des algorithmes de transposition de matrices.

L'objectif de l'invention est notamment de palier les inconvénients des dispositifs connus.

Plus précisément, un premier objectif de l'invention est de fournir un dispositif de transposition matricielle ligne-colonne à base de registres à décalage et opérateurs de permutation dont la gamme de fréquence de fonctionnement et la densité d'intégration exploitent au maximum les possibilités de la technologie utilisée.

Un autre objectif de l'invention est de fournir un dispositif de transposition matricielle capable de fonctionner aux fréquences les plus basses, c'est-à-dire en statique.

Encore un autre objectif de l'invention est de fournir une architecture à registres à décalage et opérateurs de permutation permettant une vitesse de fonctionnement du dispositif de transposition indépendante des dimensions de la matrice à transposer.

Encore un autre objectif de l'invention est de fournir un dispositif de transposition facilement extensible pour une matrice ayant un nombre quelconque de lignes et de colonnes.

Ces objectifs ainsi que d'autres sont atteints à l'aide d'un dispositif à registres à décalage et à opérateurs de permutation, notamment pour la transposition matricielle ligne-colonne de séquences de $(2^{n+1} \times 2^{n+1})$ entités, tel que défini dans la revendication 1.

Des modes de réalisations avantageux sont définis dans les revendications 2 à 5.

D'autres caractéristiques et avantages de l'invention apparaîtront à la lecture suivante de la description d'un mode de réalisation préférentiel de l'invention, donnée à titre illustratif, et des dessins annexés dans lesquels :
- la figure 1 représente un schéma fonctionnel d'un circuit réalisant une transformée en cosinus discrète en arithmétique distribuée ;
- la figure 2 est un schéma d'une cellule de transposition générale ;
- la figure 3 est un schéma représentant une matrice source (2x2) et sa matrice transposée;
- la figure 4 est un schéma d'une cellule de transposition d'un bloc (2x2) ;
- la figure 5 est un diagramme des temps de la cellule représentée en figure 4 ;
- la figure 6 représente un opérateur de transposition (8x8) ;
- la figure 7 est un diagramme des temps de l'opérateur de transposition (8x8) ;
- les figures 8a à 8d représentent les matrices (8x8) au cours de leur transposition par l'opérateur selon l'invention.

Le dispositif de transposition matricielle ligne-colonne selon l'invention, est réalisé par combinaison de plusieurs cellules, lesdites cellules étant regroupées en étage se succédant dans le sens du flot de données transitant dans le dispositif, ce flot de données constituant, en statique, une matrice carrée.

Afin de décrire les caractéristiques et le fonctionnement du dispositif, nous allons tout d'abord aborder les caractéristiques d'une cellule, constituant essentiel du dispositif.

Comme visible en figure 2, et de façon générale, une cellule type 20 est constituée de deux registres à décalage série 50 et d'un opérateur de permutation 70. De façon préférentielle, la cellule 20 possède deux entrées d'information E0,E1, et deux sorties d'information S0,S1. Les deux registres 50 à décalage série sont répartis de part et d'autre de l'opérateur de permutation 70. L'opérateur de permutation 70 possède, lui aussi, deux entrées OE1, OE2 et deux sorties OS1, OS2. L'entrée E0 de la cellule 20 correspond à l'entrée OE1 de l'opérateur de permutation 70, et la sortie OS2 de ce dernier correspond à la sortie S1 de ladite cellule. La cellule 20 est particulièrement adaptée pour réaliser des permutations d'entités 60 arrivant en séquence et parallèlement sur les deux entrées de ladite cellule 20. De manière préférentielle, lesdites entités 60 sont du type élément binaire. Les registres 50 de la cellule 20 sont constitués de sous-registres $50_i$ connectés en série, et fonctionnant en décalage série suivant le sens d'entrée dans la cellule 20 des séquences d'entités 60. Le nombre de sous-registres $50_i$ d'un registre 50 détermine la longueur dudit registre 50, cette longueur étant le paramètre de construction de la cellule 20. La seconde entrée E1 de la cellule 20 est connectée à l'entrée d'un premier registre 50, dont la sortie correspond à la deuxième entrée OE2 de l'opérateur de permutation 70, tandis que, la sortie OS1 de l'opérateur de permutation 70 est connectée à l'entrée du deuxième registre 50 dont la sortie correspond à la sortie S0 de la cellule 20. Comme cela a déjà été mentionné ci-dessus, les registres à décalage série 50 sont constitués d'une pluralité de sous-registres $50_i$, de préférence en nombre égal à une puissance de 2. Lorsque les séquences d'entités fournies en entrée à la cellule 20 sont du type séquences d'éléments binaires, chacun desdits sous-registres $50_i$ mémorise un élément binaire. La longueur des registres 50 s'exprime en fonction du nombre d'entités qu'ils mémorisent en série, donc du nombre de sous-registres $50_i$ qui les composent, cette longueur s'exprime par $2^n$, n étant le paramètre de construction de ladite cellule (n valant 0, 1, 2, 3, etc.). Les registres 50 permettent de retarder l'élément binaire se présentant en entrée de ladite cellule 20 d'une durée égale au nombre de sous-registres $50_i$ constituant le registre 50 avant son passage dans l'opérateur de permutation 70. On peut donc emprunter, selon la technologie employée, différentes solutions de réalisation pour cet élément de base 20, et choisir une technologie selon le compromis surface x vitesse voulue. L'opérateur de permutation 70 est commandé par une variable logique $C_i$ à deux états 0 ou 1, de sorte que lorsque, par convention, $C_i = 0$ l'opérateur de permutation 70 restitue lesdites données en entrée, de façon parallèle sur ses sorties correspondantes OS1, OS2 , tandis que lorsque $C_i = 1$ l'opérateur de permutation 70 croise les données se présentant sur ses entrées OE1, OE2 , sur ses sorties respectives OS1, OS2, de sorte que la donnée présentée en entrée OE1 soit restituée sur la sortie OS2 et la donnée présentée en entrée OE2 soit restituée sur la sortie OS1. Cet opérateur de permutation 70 peut être réalisé, de manière conventionnelle, par deux multiplexeurs logiques deux voies vers une voie lorsque l'on dispose d'une technologie électronique classique.

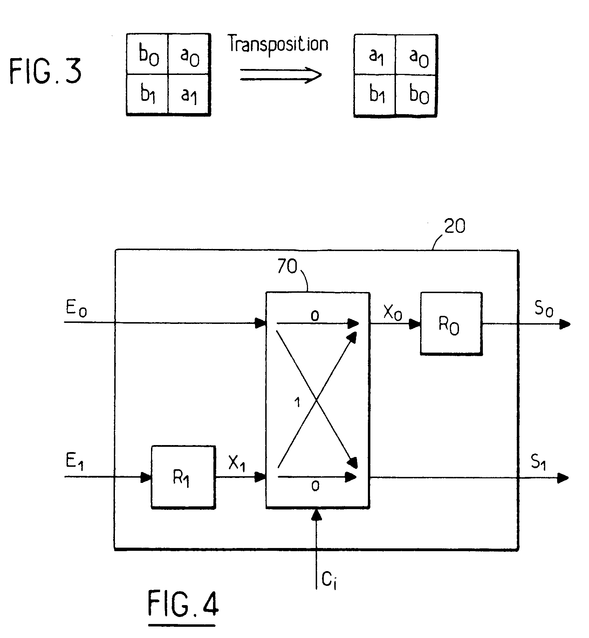

Afin de simplifier la description du fonctionnement d'une cellule de transposition 20, nous allons prendre le cas de la transposition matricielle d'une séquence de (2x2) entités, une cellule de base permettant de réaliser cette transposition matricielle élémentaire. Pour réaliser cette transposition matricielle, on utilise une cellule à registres à décalage dont chaque registre comporte un seul sous-registre mémorisant une entité comme visible en figure 4, notamment de type binaire, la nature binaire de l'entité étant donné à titre d'exemple non limitatif. La transposition matricielle d'un bloc de (2x2) entités transmis en séquences, ladite matrice étant composée des éléments A0, A1, B0 et B1, disposés sous la forme ligne-colonne, revient à permuter l'élément de matrice A1 avec l'élément de matrice B2 de sorte que les éléments ligne de la matrice initiale soient transformés en éléments colonne dans la matrice transposée correspondante, comme le montre la figure 3.

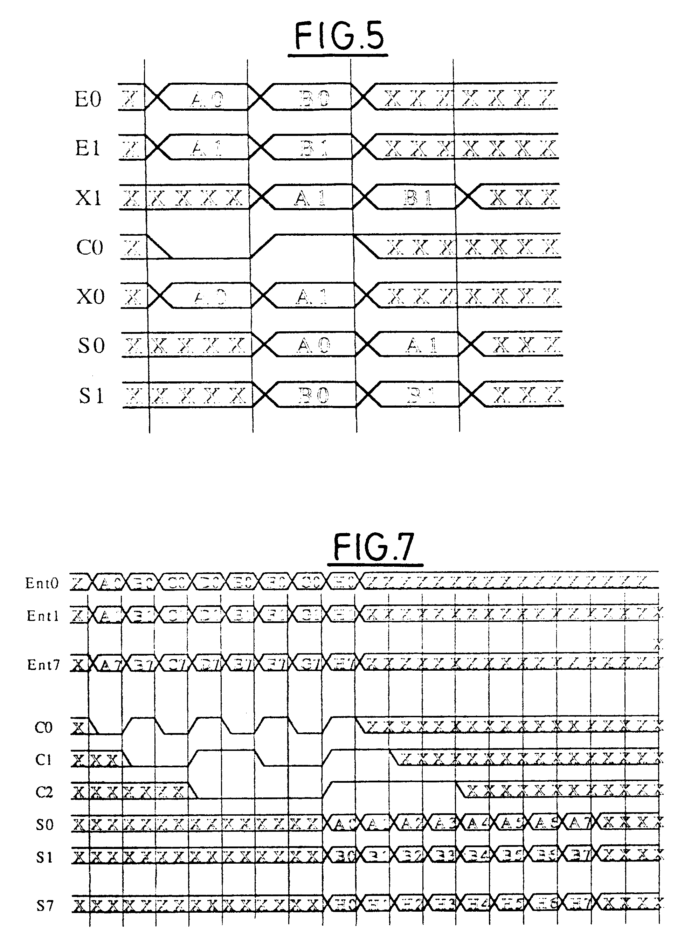

Le bloc de (2x2) entités est transmis en 2 séquences, colonne par colonne d'entités, respectivement (A0,A1) , (B0,B1) , chaque séquence d'entités renseignant respectivement les entrées E0,E1 de ladite cellule 20. La cellule 20 possède une fréquence de fonctionnement, caractérisée par les changements d'état de la variable logique $C_i$, ladite variable logique $C_i$, dans le cas présent, prenant alternativement les valeurs 0 et 1 et configurant donc successivement l'opérateur de permutation 70 dans l'un de ses modes de fonctionnement, à savoir "sortie parallèle" des données ou "croisement" des données. Ces deux modes de fonctionnement sont représentés par des flèches numérotées 0 ou 1 dans le cadre libellé 70 représentant l'opérateur de permutation. La transposition du bloc de (2x2) entités s'effectue en 3 phases correspondant respectivement à des états différents de la variable logique $C_i$, ledit bloc étant transmis par colonne de 2 entités. Une première colonne du bloc est présentée en entrée de la cellule 20, correspondant aux deux éléments colonne A0,A1. Dans cette première phase, la variable logique $C_i$ est initialisée à 0, permettant une sortie parallèle des données en entrée de l'opérateur de permutation 70. En d'autres termes, l'entité A0 traverse l'opérateur de permutation 70 et est mémorisée dans le registre à retard R0, tandis que l'entité A1 est mémorisée dans le registre à retard R1. Une seconde phase décharge le registre R0 de la valeur A0, laquelle est présentée sur la sortie S0 de ladite cellule 20. A ce stade de fonctionnement, la variable logique $C_i$ valant 1, le contenu du registre R1, c'est-à-dire A1, est transféré par croisement dans le registre R0, et l'entité B0 présentée en entrée E0 de la cellule 20 est simultanément transférée par croisement sur la sortie S1 de ladite cellule. L'entité B1 présentée sur l'entrée E1 de la cellule est, quant à elle, mémorisée dans le registre R1. Une troisième phase décharge le registre R0 de la valeur A1, laquelle est présentée sur la sortie S0, tandis que le registre R1 décharge la valeur B1, laquelle transite par l'opérateur de permutation 70 et se présente sur la sortie S1 de la cellule. Le bloc d'entités obtenu en sortie de la cellule 20 correspond au bloc initial en entrée de cette cellule mais ayant subi une transformation matricielle ligne-colonne. La figure 5 permet de mieux comprendre la chronologie des transferts de données à travers la cellule 20. En particulier, il apparaît que la vitesse de traitement de la cellule 20 est directement liée à la fréquence de fonctionnement de l'opérateur de permutation 70, puisque c'est ce dernier qui séquence les transferts de données à l'intérieur de la cellule 20. Les registres R1, R2 ont donc un rôle de temporisateur permettant à l'opérateur de permutation 70 d'effectuer le transfert adéquat sur ses sorties respectives de 2 entités se présentant sur ses entrées et réagissant selon les impulsions fournies à l'opérateur de permutation 70.

Comme cela a déjà été mentionné précédemment, la cellule de transposition 20 est l'élément de construction essentiel du dispositif de transposition matricielle ligne-colonne de séquences de $(2^{n+1} \times 2^{n+1})$ entités selon l'invention. De façon générale, le dispositif de transposition s'adapte facilement à toute matrice E de N lignes et M colonnes. En effet, dans le cas de matrice E de (NxM) entités, il suffit de "plonger" la matrice E dans une sur-matrice de $(2^{n+1} \times 2^{n+1})$ entités, où $n+1$ représente la plus petite puissance de 2 supérieure à N et M.

Nous allons maintenant décrire la structure du dispositif de transposition matricielle lignecolonne, ainsi que son fonctionnement. Pour cela, nous nous restreindrons à un dispositif selon l'invention, pour la transposition matricielle de séquences de (8x8) entités, ce dispositif étant facilement extensible pour des séquences d'entités de taille supérieure, comme cela sera décrit plus loin.

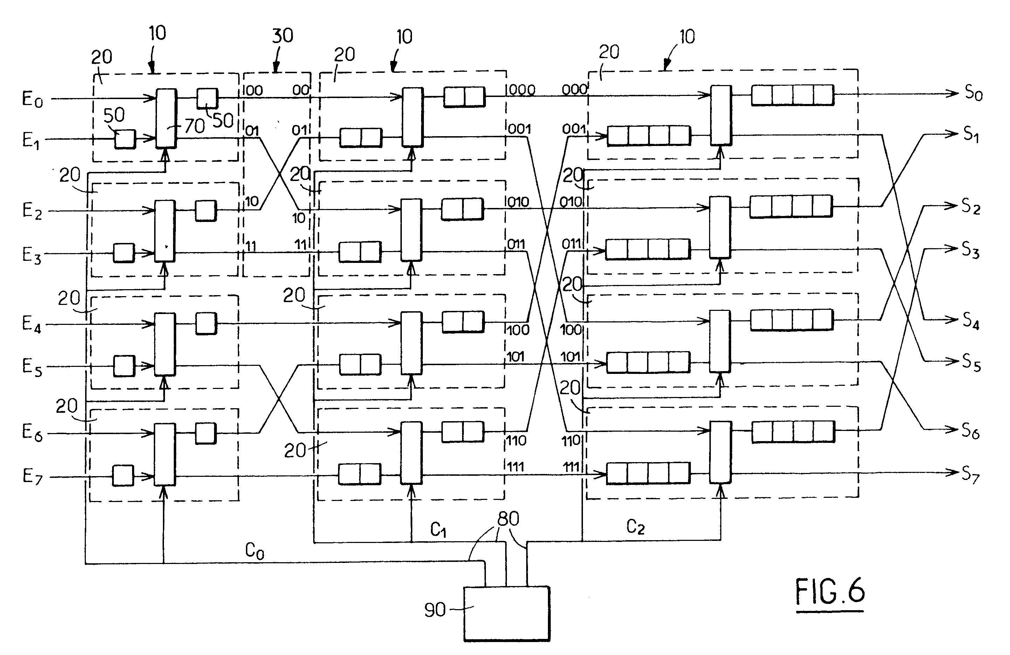

De façon avantageuse, le dispositif de transposition matricielle ligne-colonne de $(2^{n+1} \times 2^{n+1})$ entités (n valant 2) se présente sous la forme d'une suite d'étages 10 consécutifs se succédant dans le sens du flot de séquences à traiter, comme visible en figure 6. On peut affecter, à chaque étage constituant le dispositif, dans le sens du flot de séquences, un rang i, i valant 1,...,n+1 c'est-à-dire pour n=2 i valant 1,2,3. La valeur du rang de l'étage est caractéristique de la construction des cellules qu'il renferme. En d'autres termes, l'étage de rang 1 est constitué d'une pluralité de cellules 20, chaque cellule étant constituée de deux registres à décalage de longueur exprimable en fonction du rang de l'étage englobant, c'est-à-dire pour l'étage de rang i, la taille d'un registre 50 à décalage d'une cellule 20 appartenant à cet étage peut être obtenue par l'expression :

longueur d'un registre = $2^{i-1}$ où i représente la valeur du rang i de l'étage englobant ladite cellule. Ainsi, pour l'étage de rang 2, c'est-à-dire le deuxième étage du dispositif, pris dans le sens du flot de séquences, la taille d'un registre 50 d'une cellule 20 de cet étage, est égale à $2^{i-1}$ c'est-à-dire 2. Cette relation entre le rang i de l'étage et la taille des registres 50 des cellules 20 appartenant audit étage, se retrouve pour les étages de rangs différents de 2. Le nombre d'étages 10 du dispositif est, par ailleurs, directement lié à l'exposant exprimant la puissance de 2 de la taille de la séquence d'entités en entrée du dispositif de transposition. La taille de cette séquence d'entités s'exprimant sous la forme $(2^{n+1} \times 2^{n+1}$ entités), l'exposant $n+1$ détermine le nombre d'étages consécutifs du dispositif de transposition matricielle selon l'invention.

Les cellules appartenant à des étages de rangs consécutifs sont combinées entre elles par des moyens de combinaison 30, lesdits moyens de combinaison étant, de préférence, des liaisons inter-cellules. De façon préférentielle, lesdites liaisons sont regroupées par blocs de liaisons, de manière telle que pour des liaisons inter-cellules appartenant à deux étages consécutifs, respectivement de rang i, i+1, lesdites liaisons inter-cellules sont groupées par blocs de $2^{i+1}$ liaisons. En conséquence, comme visible en figure 6, entre l'étage de rang 1 et l'étage de rang 2, il existe deux blocs de liaisons inter-cellules, chacun des blocs comportant 4 liaisons inter-cellules. Entre l'étage de rang 2 et l'étage de rang 3, il existe un bloc de liaisons inter-cellules, ledit bloc comportant 8 liaisons inter-cellules. D'une façon générale, le regroupement des liaisons inter-cellules d'étages consécutifs est fonction du rang des étages reliés. Les liaisons inter-cellules sont réalisées en respectant un ordre de connexion, ledit ordre de connexion pouvant s'exprimer en considérant la taille du bloc de liaisons inter-cellules. Pour cela, il suffit, à l'intérieur d'un bloc de liaisons inter-cellules constitué de $2^r$ liaisons inter-cellules, de numéroter, dans l'ordre croissant à partir de 0, sous forme binaire sur r bits, les sorties de cellules de l'étage de rang le plus faible appartenant audit bloc, de prendre l'image miroir du numéro affecté à une sortie de cellule pour obtenir le numéro de l'entrée de cellule appartenant à l'étage de rang supérieur. Si l'on prend le cas des étages de rangs consécutifs, respectivement de rang 1, 2, les liaisons inter-cellules regroupées en blocs de 4 liaisons comportent chacune une extrémité entrée et une extrémité sortie, correspondant respectivement à une sortie de cellule de l'étage de rang 1 et une entrée de cellule de l'étage de rang 2. A l'intérieur du bloc de liaisons, les sorties de cellule de l'étage de rang 1 sont numérotées sur 2 bits, dans l'ordre croissant à partir de 00 jusqu'à 11. Les entrées de cellule de l'étage de rang 2 correspondantes sont directement repérées en recherchant leur numéro sur 2 bits, à partir de l'image miroir des numéros des sorties de l'étage de rang 1. Si l'on prend maintenant le cas des étages consécutifs, respectivement de rang 2, 3, les liaisons inter-cellules regroupées en blocs de 8 liaisons sont numérotées en entrée de liaisons sur 3 bits de 000 à 111, les sorties de liaisons comportant un numéro image miroir du numéro de l'entrée de liaisons. Ce processus est facilement extensible et généralisable pour un nombre quelconque d'étages du dispositif, et donc de cellules appartenant auxdits étages. Ces sorties des cellules de l'étage de rang le plus important $(n+1)$ respectent aussi un ordre spatial. Cet ordre peut être réalisé en numérotant lesdites sorties sur $n+1$ bits et en les organisant de sorte que leur position est déterminée, par rotation d'un bit vers la droite de leur numéro de sortie d'étage.

Les différents étages de rang 1 à 3 sont commandés sélectivement par des moyens de commande sélectifs constitués de préférence par un séquenceur 90 et de moyens d'activation 80. Les moyens d'activation 80, du type liaisons filaires, relient le séquenceur 90 sélectivement à chacun desdits étages 10, et plus particulièrement aux moyens de sélection $C_i$ de chaque cellule 20, lesdits moyens de sélection commandant le fonctionnement des opérateurs de permutation 70 des cellules 20. De préférence, les moyens de sélection $C_i$ du mode de fonctionnement des opérateurs de permutation 70 des cellules 20 appartenant à un étage spécifique, sont reliés en parallèle de sorte que par une commande unique issue du séquenceur 90 et adressée à un étage 10 spécifique, l'ensemble des opérateurs de permutation 70 des cellules 20 de cet étage réagissent en même temps et selon le mode de fonctionnement désiré.

Pour un dispositif de transposition matricielle, tel que celui représenté sur la figure 6, on distingue donc $n+1$ moyens d'activation 80 (n valant 2) répartis respectivement sur les $n+1$ étages du dispositif, lesdits moyens d'activation 80 pouvant se voir affecter un numéro de rang de 1 à $n+1$.

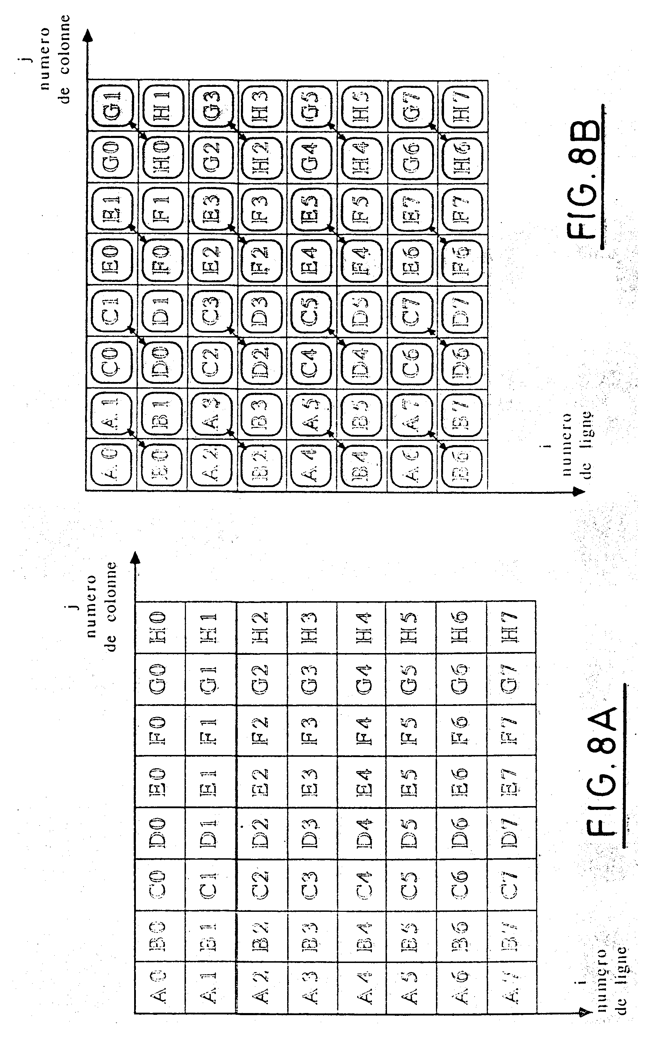

Les différents étages 10 du dispositif fonctionnent en pipeline, les séquences d'entités traversant consécutivement les différents étages dans l'ordre de leur connexion. Le séquenceur 90 commande, de façon synchrone et sélectivement, lesdits étages 10 via les $n+1$ moyens d'activation 80 de manière telle que le délai entre les sollicitations de 2 moyens d'activation de rangs consécutifs, est linéairement dépendant du nombre d'entités 60 mémorisables dans un registre à décalage série 50 appartenant à une cellule 20 de l'étage 10 associé aux moyens d'activation de rang le plus faible. En d'autres termes, et selon la figure 7, le séquenceur 90 fournit $n+1$ commandes binaires C0, C1, C2, synchronisées sur une base de temps ou tops d'horloge, qui peuvent être décrites comme les sorties retardées d'un compteur diviseur par 2 du nombre des éléments entrant, la commande C1 ayant un retard d'un top d'horloge par rapport à la commande C0, la commande C2 ayant un retard de 2 tops d'horloge par rapport à la commande C1. Plus précisément encore, et comme visible sur la figure 7, les opérateurs de permutation 70 associés à l'étage de rang 1, fonctionnent selon la base de temps de référence, la commande C0 passant alternativement de la valeur 0 à 1 à chaque top d'horloge, la valeur 0 de la commande C0 configurant les opérateurs de permutation de l'étage de rang 1 dans le mode "sortie parallèle", et la valeur 1 de la commande C0 configurant les opérateurs de permutation de l'étage de rang 1 dans le mode "sorties croisées". La commande C1 a un retard d'un top d'horloge par rapport à la commande C0, et passe alternativement de la valeur 0 à la valeur 1, tous les 2 tops d'horloge. La commande C2 a un retard de 2 tops d'horloge par rapport à la commande C1, et passe alternativement de la valeur 0 à la valeur 1, tous les 4 tops d'horloge. Ce type de séquencement peut être facilement réalisable et généralisable pour un nombre quelconque d'étages constituant le dispositif de transposition matricielle. Les registres mémoire 50, du type registre mémorisant plusieurs entités en série (2, 4 ou plus) transfèrent à chaque top d'horloge donné par la base de temps de référence, les entités qu'ils mémorisent selon un décalage vers la droite desdites entités mémorisées dans leurs sous-registres, de sorte qu'une entité traversant un registre 50 d'une cellule 20 de l'étage de rang 3 par exemple, est transférée depuis la gauche vers la droite dans les 4 sousregistres, par 3 décalages successifs vers la droite avant de quitter ledit registre au 4eme top d'horloge consécutif.

Une matrice source de (8x8) entités est transmise par séquences en entrée du dispositif de transposition matricielle, chaque ligne de la matrice étant affectée à une entrée correspondante du dispositif (E0,..., E7), lesdites entités appartenant aux lignes de la matrice source arrivant en série sur lesdites entrées du dispositif de transposition. De façon préférentielle, la cadence de transmission des entités dans le dispositif de transposition est liée à la fréquence de fonctionnement des opérateurs de permutation 70, c'est-à-dire de façon générale, à la fréquence d'horloge du dispositif de transposition.

L'invention concerne aussi un procédé de transposition matricielle ligne-colonne de séquences de $(2^{n+1} \times 2^{n+1})$ entités notamment de type binaire au moyen d'un dispositif à registres à décalage et à opérateurs de permutation tel que décrit ci-dessus.

Dans un but de clarté, nous allons décrire ce procédé de transposition matricielle pour le cas d'une matrice de (8x8) entités fournie en séquences au dispositif de l'invention. Le procédé de transposition matricielle ligne-colonne d'une matrice source (8x8) entités, telle que représentée sur la figure 8a, consiste à effectuer 3 étapes successives correspondant aux 3 étages consécutifs du dispositif de transposition. Une première étape consiste à découper la matrice de (8x8) entités en 16 sous-matrices de (2x2) entités. Les entités arrivant en séquences sur les entrées du dispositif de transposition matricielle tel que décrit précédemment, le premier étage effectue 4 fois en parallèle la transposition de 4 sous-matrices de (2x2) entités. On obtient, ainsi, une matrice intermédiaire de (8x8) entités, comme représenté en figure 8b. Cette première étape est réalisée par 4 cellules 20 appartenant à l'étage de rang 1, lesdites cellules étant commandées par la commande C0.

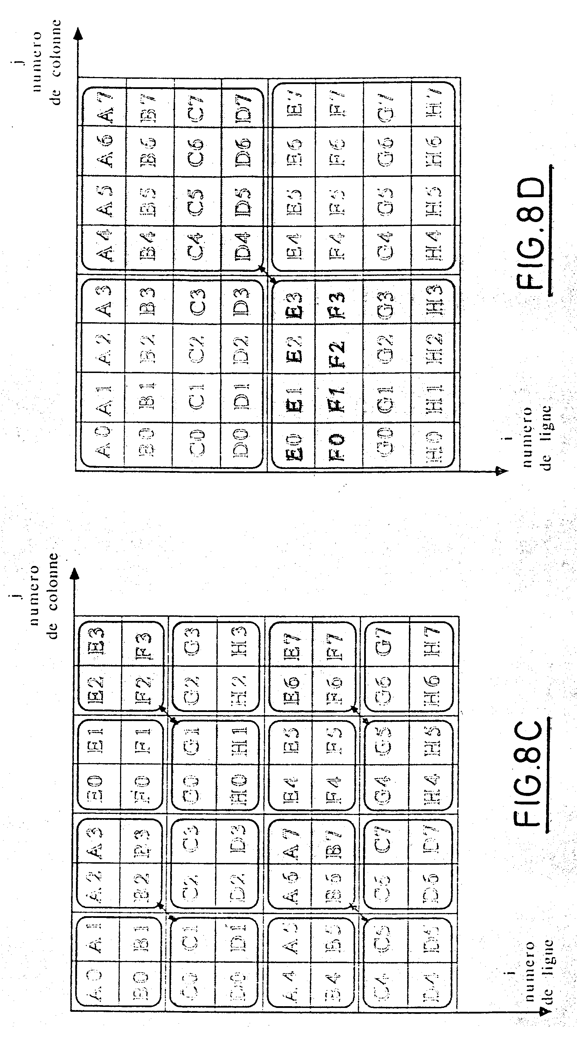

Une deuxième étape consiste à découper la matrice de (8x8) entités produite par le premier étage en 4 sous-matrices de (4x4) entités dont les éléments à transposer sont des sous-matrices de (2x2) entités. On obtient, ainsi, une seconde matrice intermédiaire de (8x8) entités, comme représenté sur la figure 8c. Cette deuxième étape est réalisée par 4 cellules 20 appartenant à l'étage de rang 2, et commandées par la commande C1.

Une troisième étape consiste à découper la matrice de (8x8) entités produite par la deuxième étape en 4 sous-matrices de (4x4) entités. Cette troisième étape est réalisée par 4 cellules 20 appartenant à l'étage de rang 3, et commandées par la commande C2. On obtient une matrice de (8x8) entités telle que représentée sur la figure 8d et correspondant à la matrice transposée ligne-colonne de ladite matrice source.

Les connexions entre les étages successifs et l'organisation des lignes de sortie du dispositif de transposition matricielle permettent de former, de façon dichotomique, les sous-matrices 2x2, 4x4 et 8x8 à la sortie de chaque étage. La transposition d'une matrice constituée de 4 éléments, du type entité élémentaire ou sous-matrice carrée comportant une pluralité d'entités élémentaires, consiste à permuter, selon une diagonale de la matrice, les 2 éléments de matrice diagonalement opposés.

Les éléments de matrice progressant spacialement et temporellement à travers le dispositif de transposition matricielle ligne-colonne selon l'invention, ladite permutation d'éléments de matrice correspondant à un étage spécifique du dispositif consiste à :
- appliquer un retard d'une durée équivalente à une dimension d'un élément de matrice, sur la seconde ligne de la matrice à transposer ,
- permuter les 2 éléments de matrice correspondant spacialement et temporellement en colonne,

- appliquer un retard d'une durée équivalente à une dimension d'un élément de matrice, sur la première ligne de la matrice à transposer.

Le retardement d'une ligne d'éléments de matrice, se déplaçant par séquence à l'intérieur du dispositif de transposition, est obtenu par temporisation de la progression de cette ligne d'éléments dans les registres à décalage série 50 des cellules 20 associées à l'étage 10 traversé par la ligne d'éléments, ledit étage étant caractérisé par la construction des cellules le constituant, cette construction dépendant de la taille des registres 50 desdites cellules.

La permutation de 2 éléments de matrice est assurée pour les opérateurs de permutation 70 fonctionnant avec lesdits registres 50.

Le dispositif de transposition matricielle selon l'invention est particulièrement adapté aussi pour réaliser les opérations de conversion série-parallèle et parallèle-série de mots binaires de taille quelconque. Les conversions parallèle-série et série-parallèle peuvent être considérées comme des transpositions de matrice englobant les mots binaires. Dans le cas d'une conversion parallèle-série, les mots binaires de même taille définissent les colonnes de la matrice. Dans le cas opposé d'une conversion série-parallèle, les mots binaires définissent les lignes de la matrice. L'opération de transposition matricielle étant sa propre inverse, on peut utiliser ainsi le même opérateur de transposition pour réaliser soit un opérateur de conversion parallèle-série ou sérieparallèle.

Dans l'état actuel de la technologie de traitement de l'information, on utilise plus couramment l'électronique et les circuits monolithiques sur silicium, ou des composants réalisés à partir d'arseniure de gallium. Cependant, il pourrait être intéressant de disposer d'un opérateur de transposition matricielle capable de fonctionner à grande vitesse, et compatible avec la technologie du transport de l'information sur fibre optique. Dans ce cas, chaque cellule appartenant à un étage de rang i serait munie de retards de valeur i/C où C est la vitesse de la lumière dans la fibre optique utilisée. L'élément de permutation d'une cellule de transposition pourra être réalisée par coupleur électro-optique.

Le circuit de transposition selon l'invention permet de réaliser simplement la transposition de matrice de dimensions quelconques ; la fréquence de fonctionnement du circuit étant indépendante des dimensions de la matrice à transposer.

La structure du circuit de transposition étant basée sur des cellules logiques quasi-identiques sa structure répétitive se prête bien à être réalisée simplement et rapidement en un circuit intégré.

Le choix de la cellule de base du circuit de transposition permet d'obtenir pour une application le compromis souhaité entre sa vitesse maximale de transposition et son coût, notamment en terme de surface de silicium utilisée. Le séquencement, du type pipeline du circuit selon l'invention, est simple et de fréquence de fonctionnement intrinsèquement élevée car seulement limitée par la technologie employée.

**Revendications**

1. Dispositif à registres à retard et a opérateurs de permutation, notamment pour la transformation matricielle ligne-colonne de séquences de ($2^{n+1}$x$2^{n+1}$) entités, caractérisé en ce qu'il comprend n+1 étages (10) de rang 1 à n+1 fonctionnant en pipeline, des moyens de commande sélectifs (80, 90) des différents étages, chaque étage comprenant $2^n$ cellules (20), lesdites cellules comportant au moins deux registres à retard série (50), lesdits registres à retard série de chaque cellule (20) de rang i présentant chacun $2^{i-1}$ positions en série de mémorisation des entités (60) et étant répartis de part et d'autre d'un opérateur de permutation (70) à au moins 2 entrées d'information et 2 sorties d'information, et au moins un circuit d'interconnexion (30) reliant les sorties des cellules de rang i aux entrées des cellules de rang i+1, i définissant le rang de l'étage (10) et étant compris entre 1 et n+1.

2. Dispositif selon la revendication 1 caractérisé en ce que lesdits moyens de commande sélectifs (80,90) sont reliés aux opérateurs de permutation (70) des cellules (20), de manière à permettre la sélection d'un mode $C_i$ de fonctionnement dudit opérateur.

3. Dispositif selon une quelconque des revendications précédentes, caractérisé en ce que ledit opérateur de permutation (70) comporte au moins deux modes de fonctionnement $C_i$, un premier mode dans lequel les informations en entrée dudit opérateur de permutation sont parallélisées en sortie de celui-ci, et un second mode dans lequel les informations en entrée sont croisées en sortie.

4. Dispositif selon une quelconque des revendications précédentes, caractérisé en ce que lesdits moyens de commande sélectifs (80,90) des différents étages (10) de rang 1 à n+1 permettant la sélection des modes de fonctionnement $C_i$ d'un opérateur de permutation (70) sont constitués de n+1 moyens d'activation (80) de rang 1 à n+1, répartis respectivement sur les n+1 étages (10), lesdits n+1 moyens d'activation (80) étant sollicités de façon synchrone et sélectivement par un moyen de synchronisation (90) des moyens d'activation (80) de manière telle que le délai entre les sollicitations de 2 moyens d'activation de rang consécutif est linéairement dépendant du nombre d'entités (60) mémorisées dans un registre à retard série (50) appartenant à une cellule (20) de l'étage (10) associé au moyen d'activation de rang le plus faible.

5. Dispositif selon l'une quelconque des revendications précédentes caractérisé en ce que les cellules (20) des étages de rang i et i+1 sont groupées par blocs de $2^i$ cellules, les $2^{i+1}$ sorties desdites $2^i$ cellules (20) de chaque bloc de rang i étant respectivement connectées aux $2^{i+1}$ entrées d'un des blocs de $2^i$ cellules de l'étage de rang i+1 par l'intermédiaire dudit circuit d'interconnexion (30).

**Claims**

1. Device, having shift registers and permutation operators, especially for the matrix row-column transformation of sequences of ($2^{n+1}$x$2^{n+1}$) units, characterised in that it comprises n+1 stages (10) of rank 1 to n+1 and functioning as a pipeline, selective control means (80, 90) for the various stages, each stage comprising $2^n$ cells (20), said sells comprising at least two shift registers (50) in series, said shift registers of each cell (20) of rank i each having $2^{i-1}$ positions in series for memorising the units (60) and being divided, on both sides of a permutation operator (70), into at least 2 information inputs and 2 information outputs, and at least one interconnection circuit (30) connecting the outputs of the cells of rank i to the inputs of the cells of rank i+1, i defining the rank of the stage (10) and being between 1 and n+1.

2. Device according to claim 1, characterised in that said selective control means (80, 90) are connected to the permutation operators (70) of the cells (20), so as to permit the selection of one operational mode $C_i$ ofsaid operator.

3. Device according to any one of the preceding claims, characterised in that said permutation operator (70) comprises at least two operational modes $C_i$, a first mode in which the bits of information at the input of said permutation operator are made Parallel at the output thereof, and a second mode in which the bits of information at the input are crossed at the output.

4. Device according to any one of the preceding claims, characterised in that said selective control means (80, 90) of the various stages (10) of rank 1 to n+1, which means permits the selection of the operational modes $C_i$ of a permutation operator (70), comprise n+1 activation means (80) of rank 1 to n+1, divided respectively over the n+1 stages (10), said n+1 activation means (80) being synchronously and selectively acted upon by a synchronisation means (90) for the activation means (80) in such a manner that the delay between the actuations of 2 activation means of consecutive rank is linearly dependent on the number of units (60) memorised in a series shift register (50) belonging to a cell (20) of the stage (10) associated with the activation means of lowest rank.

5. Device according to any one of the preceding claims, characterised in that the cells (20) of the stages of rank i and i+1 are grouped by blocks of $2^i$ cells, the $2^{i+1}$ outputs of said $2^i$ cells (20) of each block of rank i being respectively connected to the $2^{i+1}$ inputs of one of the blocks of $2^i$ cells of the stage of rank i+1 through the intermediary of said interconnection circuit (30).

**Patentansprüche**

1. Vorrichtung mit Retardierungsregistern und Permutationsoperatoren, insbesondere zur Zeile-Spalte-Matrixumwandlung von Folgen von $(2^{n+1} \times 2^{n+1})$-Einheiten, dadurch gekennzeichnet, daß sie n+1 pipelineartige Stufen (10) des Rangs 1 bis n+1, selektive Steuerungen (80, 90) der verschiedenen Stufen umfaßt, wobei jede Stufe $2^n$ Zellen 20 umfaßt, wobei diese Zellen wenigstens zwei Reihenretardierungsregister (50) unifassen, wobei die Reihenretardierungsregister jeder Zelle (20) des Rangs i jeweils $2^{i-1}$ Reihenpositionen zur Speicherung der Einheiten (60) aufweisen und beiderseits eines Permutationsoperators (70) auf mindestens 2 Informationseingänge und 2 Informationsausgänge verteilt sind, und wobei wenigstens ein Verbindungsschaltkreis (30) die Ausgänge der Zellen des Rangs i mit den Eingängen der Zellen des Rangs i+1 verbindet, wobei i den Rang der Stufe (10) definiert und zwischen 1 und n+1 liegt.

2. Vorrichtung nach Patentanspruch 1, dadurch gekennzeichnet, daß die selektiven Steuerungen (80, 90) mit den Permutationsoperatoren (70) der Zellen (20) so verbunden sind, daß sie die Auswahl einer Funktionsart $C_i$ des Operators erlauben.

3. Vorrichtung nach einem der vorhergehenden Patentansprüche, dadurch gekennzeichnet, daß der Permutationsoperator (70) wenigstens zwei Funktionsarten $C_i$ umfaßt, wobei in einer ersten Funktionsart die in den Permutationsoperator eingehenden Informationen an dessen Ausgang parallel wiedergegeben werden und wobei in einer zweiten Funktionsart die Eingangsinformationen am Ausgang verkreuzt sind.

4. Vorrichtung nach einem der vorhergehenden Patentansprüche, dadurch gekennzeichnet, daß die selektiven Steuerungen (80, 90) der verschiedenen Stufen (10) des Rangs 1 bis n+1, die die Auswahl der Funktionsarten $C_i$ eines Permutationsoperators (10) ermöglichen, aus n+1 Aktivierungsmitteln (80) des Rangs 1 bis n+1 bestehen, die jeweils auf die n+1 Stufen (10) verteilt sind, wobei die n+1 Aktivierungsmittel (80) synchron und selektiv durch ein Synchronisierungsmittel (90) der Aktivierungsmittel (80) beaufschlagt werden, so daß der Zeitraum zwischen den Beaufschlagungen von bei Aktivierungsmitteln des folgenden Rangs linear anhängig ist von der Zahl der Einheiten (60), die in einem Reihenretardierungsregister (50) gespeichert sind, das einer Zelle (20) der dem Aktivierungsmittel des niedrigsten Rangs zugeordneten Stufe (10) zugehörig ist.

5. Vorrichtung nach einem der vorhergehenden Patentansprüche, dadurch gekennzeichnet, daß die Zellen (20) der Stufen des Rangs i und i+1 in Gruppen von $2^i$ Zellen aufgeteilt sind, wobei die $2^{i+1}$ Ausgänge der $2^i$ Zellen (20) jeder Gruppe des Rangs i jeweils mit den $2^{i+1}$ Eingängen einer der Gruppen der $2^i$ Zellen der Stufe des Rangs i+1 mittels des Verbindungsschaltkreises (30) verbunden sind.

FIG.1

FIG.2

11

FIG.3

| $b_0$ | $a_0$ |
|-------|-------|
| $b_1$ | $a_1$ |

Transposition
$\Longrightarrow$

| $a_1$ | $a_0$ |
|-------|-------|
| $b_1$ | $b_0$ |

FIG.4

# FIG.5

| | | | | |
|---|---|---|---|---|
| E0 | X | A0 | B0 | X X X X X X X |
| E1 | X | A1 | B1 | X X X X X X X |
| X1 | X X X X X | A1 | B1 | X X X |
| C0 | X | | | X X X X X X X |
| X0 | X | A0 | A1 | X X X X X X X |
| S0 | X X X X X | A0 | A1 | X X X |
| S1 | X X X X X | B0 | B1 | X X X |

# FIG.7

| | |
|---|---|
| Ent0 | X A0 B0 C0 D0 E0 F0 G0 H0 X X X X X X X X X X X X X X X X X X X |
| Ent1 | X A1 B1 C1 D1 E1 F1 G1 H1 X X X X X X X X X X X X X X X X X X X |
| Ent7 | X A7 B7 C7 D7 E7 F7 G7 H7 X X X X X X X X X X X X X X X X X X X |
| C0 | X |
| C1 | X X X |
| C2 | X X X X X X X |
| S0 | X X X X X X X X X X X X A0 A1 A2 A3 A4 A5 A6 A7 X X X X |
| S1 | X X X X X X X X X X X X B0 B1 B2 B3 B4 B5 B6 B7 X X X X |
| S7 | X X X X X X X X X X X X H0 H1 H2 H3 H4 H5 H6 H7 X X X X |

13

FIG.6

EP 0 376 769 B1

EP 0 376 769 B1

j
numero
de colonne

| A0 | B0 | C0 | D0 | E0 | F0 | G0 | H0 |
|----|----|----|----|----|----|----|----|
| A1 | B1 | C1 | D1 | E1 | F1 | G1 | H1 |
| A2 | B2 | C2 | D2 | E2 | F2 | G2 | H2 |
| A3 | B3 | C3 | D3 | E3 | F3 | G3 | H3 |
| A4 | B4 | C4 | D4 | E4 | F4 | G4 | H4 |
| A5 | B5 | C5 | D5 | E5 | F5 | G5 | H5 |
| A6 | B6 | C6 | D6 | E6 | F6 | G6 | H6 |
| A7 | B7 | C7 | D7 | E7 | F7 | G7 | H7 |

i
numero
de ligne

## FIG.8A

j
numero
de colonne

| A0 | A1 | C0 | C1 | E0 | E1 | G0 | G1 |
|----|----|----|----|----|----|----|----|
| E0 | B1 | D0 | D1 | F0 | F1 | H0 | H1 |
| A2 | A3 | C2 | C3 | E2 | E3 | G2 | G3 |
| B2 | B3 | D2 | D3 | F2 | F3 | H2 | H3 |
| A4 | A5 | C4 | C5 | E4 | E5 | G4 | G5 |
| B4 | B5 | D4 | D5 | F4 | F5 | H4 | H5 |
| A6 | A7 | C6 | C7 | E6 | E7 | G6 | G7 |
| B6 | B7 | D6 | D7 | F6 | F7 | H6 | H7 |

i
numero
de ligne

## FIG.8B

EP 0 376 769 B1

j
numero
de colonne

| A0 | A1 | A2 | A3 | E0 | E1 | E2 | E3 |
|----|----|----|----|----|----|----|----|
| B0 | B1 | B2 | B3 | F0 | F1 | F2 | F3 |
| C0 | C1 | C2 | C3 | G0 | G1 | G2 | G3 |
| D0 | D1 | D2 | D3 | H0 | H1 | H2 | H3 |
| A4 | A5 | A6 | A7 | E4 | E5 | E6 | E7 |
| B4 | B5 | B6 | B7 | F4 | F5 | F6 | F7 |
| C4 | C5 | C6 | C7 | G4 | G5 | G6 | G7 |
| D4 | D5 | D6 | D7 | H4 | H5 | H6 | H7 |

i
numero
de ligne

**FIG.8C**

j
numero
de colonne

| A0 | A1 | A2 | A3 | A4 | A5 | A6 | A7 |
|----|----|----|----|----|----|----|----|
| B0 | B1 | B2 | B3 | B4 | B5 | B6 | B7 |
| C0 | C1 | C2 | C3 | C4 | C5 | C6 | C7 |
| D0 | D1 | D2 | D3 | D4 | D5 | D6 | D7 |
| E0 | E1 | E2 | E3 | E4 | E5 | E6 | E7 |
| F0 | F1 | F2 | F3 | F4 | F5 | F6 | F7 |
| G0 | G1 | G2 | G3 | G4 | G5 | G6 | G7 |
| H0 | H1 | H2 | H3 | H4 | H5 | H6 | H7 |

i
numero
de ligne

**FIG.8D**